# EUROPÄISCHE PATENTSCHRIFT

(11) **EP 4 244 662 B1**
(45) Veröffentlichungstag und Bekanntmachung des Hinweises auf die Patenterteilung: **14.08.2024**
(21) Anmeldenummer: 21805522.6
(22) Anmeldetag: 05.11.2021
(51) Int. Cl.: G01W 1/14

(54) **VERFAHREN UND VORRICHTUNG ZUM ERKENNEN VON UNTERKÜHLTEM FLÜSSIGEM NIEDERSCHLAG**
METHOD AND DEVICE FOR DETECTING SUBCOOLED LIQUID PRECIPITATE
PROCÉDÉ ET DISPOSITIF DE DÉTECTION DE PRÉCIPITATIONS LIQUIDES REFROIDIES

(30) Priorität: 10.11.2020 EP 20206578
(43) Veröffentlichungstag der Anmeldung: 20.09.2023
(73) Patentinhaber: Adolf Thies GmbH & Co KG, 37083 Göttingen (DE)
(72) Erfinder: BEINHORN, Joachim, 37127 Niemetal (DE); PEPER, Christoph, 30173 Hannover (DE); WINDOLPH, Herbert, 37115 Duderstadt (DE)
(74) Vertreter: REHBERG HÜPPE + PARTNER
(86) Internationale Anmeldenummer: PCT/EP2021/080759
(87) Internationale Veröffentlichungsnummer: WO 2022/101099

(56) Entgegenhaltungen:
- EP-A1- 0 360 892
- WO-A1-2019/121805
- DE-A1- 10 150 320
- DE-B- 1 245 615

## Beschreibung

Die Erfindung bezieht sich auf ein Verfahren zum Erkennen von unterkühltem flüssigem Niederschlag, bei dem eine Temperatur eines Objekts mit einer Niederschlagauftrefffläche gemessen wird und erfasst wird, ob Niederschlag auf die Niederschlagauftrefffläche auftritt. Weiterhin bezieht sich die Erfindung auf eine Vorrichtung zum Erkennen von unterkühltem flüssigem Niederschlag mit einem eine Niederschlagauftrefffläche aufweisenden Objekt, Temperaturmesseinrichtungen zum Messen einer Temperatur des Objekts, Niederschlagserfassungseinrichtungen zum Erfassen, ob Niederschlag auf die Niederschlagauftrefffläche auftritt, und Auswerteeinrichtungen.

Die häufigste Form von unterkühltem flüssigen Niederschlag ist unterkühlter oder gefrierender Regen, der im Englischen als freezing rain bezeichnet wird und den METAR-Code FZRA hat. So wie er hier verwendet wird, deckt der Begriff unterkühlter flüssiger Niederschlag neben unterkühltem Regen unterkühlten flüssigen Niederschlag kleinerer Tröpfchengröße, d. h. beispielsweise gefrierenden Niesel ab, der im Englischen als freezing drizzle bezeichnet wird und den METAR-Code FZDZ hat.

Unterkühlter flüssiger Niederschlag weist vor dem Auftreffen auf den Boden eine Temperatur unterhalb von 0 °C auf. Unterkühlter flüssiger Niederschlag entsteht beispielsweise dann, wenn Regen durch eine bodennahe Luftschicht fällt, deren Temperatur unterhalb von 0 °C liegt. Wenn das Wasser der Regentropfen sehr rein ist, kristallisiert es in der Luft nicht, sondern kühlt ohne Phasenwechsel auf die Lufttemperatur der umgebenden Luft von unter 0 °C ab. Beim Auftreffen auf den Boden kann unterkühlter flüssiger Niederschlag sehr schnell gefrieren und dabei geschlossene Eisflächen ausbilden. Daher ist unterkühlter flüssiger Niederschlag im Straßen- und Flugverkehr gefürchtet. Wichtig ist es daher, unterkühlten flüssigen Niederschlag schnell und sicher zu erkennen, um vor den damit verbundenen Gefahren warnen zu können.

### STAND DER TECHNIK

Bekannte Verfahren und Vorrichtungen zum Erfassen von unterkühltem flüssigem Niederschlag basieren auf dem Erkennen der Vereisung eines dem Niederschlag ausgesetzten Objekts, von dem nicht gefrierender flüssiger Niederschlag herablaufen oder an dem bereits in der Luft gefrorener Niederschlag nicht anhaftet. Konkret wird eine Erhöhung der effektiven Masse als Hinweis auf die Vereisung des Objekts erfasst, beispielsweise indem eine mit der zunehmenden effektiven Masse abnehmende mechanische Resonanzfrequenz, ein mit der zunehmenden effektiven Masse größer werdendes Trägheitsmoment oder die Erhöhung der effektiven Masse direkt erfasst wird. Zusätzlich wird die Lufttemperatur gemessen, da unterkühlter flüssiger Niederschlag typischerweise nur in einem begrenzten Bereich der Lufttemperatur von -2 °C bis - 20 °C auftritt.

Aus der EP 3 196 676 A1 sind ein Verfahren mit den Merkmalen des Oberbegriffs des unabhängigen Patentanspruchs 1 und eine Vorrichtung mit den Merkmalen des Oberbegriffs des unabhängigen Patentanspruchs 9 bekannt. Die Vorrichtung weist eine Yagi-Uda-Antenne auf, deren Antwortsignal auf ein Anregungssignal mit Niederschlag variiert, der sich auf ihren Oberflächen abscheidet. Weiterhin wird die Temperatur mit einem im Bereich der Yagi-Uda-Antenne angeordneten Temperatursensor erfasst. Indem die Informationen aus dem Antwortsignal von der Yagi-Uda-Antenne mit dem Temperaturverlauf verknüpft werden, wird in Abgrenzung zu flüssigem Niederschlag, der erst nach einem Abfallen der Lufttemperatur auf der Yagi-Uda-Antenne gefriert, auf das Vorliegen von sofort gefrierendem unterkühltem flüssigem Niederschlag geschlossen. WO2019/121805 A1, EP0360892 A1, DE10150320 A1 und DE1245615 B stellen weitere relevante Dokumente des Stands der Technik dar.

### AUFGABE DER ERFINDUNG

Der Erfindung liegt die Aufgabe zugrunde, ein Verfahren und eine Vorrichtung aufzuzeigen, mit denen unterkühlter flüssiger Niederschlag bereits auf Basis sehr kleiner Niederschlagsmengen und damit sehr früh sicher erkannt wird.

### LÖSUNG

Die Aufgabe der Erfindung wird durch ein Verfahren mit den Merkmalen des unabhängigen Patentanspruchs 1 und durch eine Vorrichtung zur Durchführung dieses Verfahrens mit den Merkmalen des Patentanspruchs 9 gelöst. Bevorzugte Ausführungsformen des erfindungsgemäßen Verfahrens und der erfindungsgemäßen Vorrichtung sind in den abhängigen Patentansprüchen 2 bis 8 und 10 bis 15 definiert.

### BESCHREIBUNG DER ERFINDUNG

Bei einem erfindungsgemäßen Verfahren zum Erkennen von unterkühltem flüssigem Niederschlag wird eine Temperatur eines Objekts mit einer Niederschlagauftrefffläche gemessen, und es wird erfasst, ob Niederschlag auf die Niederschlagauftrefffläche auftritt. Bei einem Anstieg der Temperatur unterhalb von 0 °C infolge von auftretendem Niederschlag wird eine Warnung vor unterkühltem flüssigem Niederschlag ausgegeben.

Bei dem erfindungsgemäßen Verfahren wird also dann vor unterkühltem flüssigem Niederschlag gewarnt, wenn die Temperatur des Objekts unterhalb von 0 °C infolge von auftretendem Niederschlag einen Anstieg zeigt. Wenn unterkühlter flüssiger Niederschlag auf die Niederschlagauftrefffläche des Objekts auftrifft und dort gefriert, wird Kristallisationswärme frei. Die Kristallisationswärme von Wasser ist fast 80 mal so groß wie die Wärmekapazität von Wasser pro Kelvin. Beim Gefrieren von unterkühltem flüssigem Niederschlag wird diese große Kristallisationswärme sehr schnell freigesetzt und daher resultiert bereits aus einer sehr kleinen Menge an unterkühltem flüssigem Niederschlag ein signifikanter Anstieg der gemessenen Temperatur des Objekts. Konkret steigt die Temperatur in dem jeweiligen gefrierenden Tropfen des unterkühlten flüssigen Niederschlags und damit auch unmittelbar an der Niederschlagauftrefffläche schlagartig auf 0 °C an und bleibt dort solange, bis die gesamte Kristallisationswärme des Tropfens aufgebraucht, d. h. dissipiert ist. Durch die Wärmekapazität des Objekts fällt der Anstieg der Temperatur des gesamten Objekts und damit auch der gemessenen Temperatur des Objekts grundsätzlich kleiner aus, sofern nicht sehr viel unterkühlter flüssiger Niederschlag auf der Niederschlagauftrefffläche gefriert. Wegen endlicher Temperaturleitfähigkeit des Objekts resultiert jedoch selbst bei sehr großer Wärmekapazität des Objekts an Orten nahe der Niederschlagauftrefffläche ein deutlicher Anstieg der Temperatur des Objekts, der beim Messen der Temperatur des Objekts an diesen Orten leicht erfassbar und als Hinweis auf auf der Niederschlagauftrefffläche gefrierenden unterkühlten flüssigen Niederschlag auswertbar ist. Beim Vorliegen dieses Hinweises wird die Warnung vor unterkühltem flüssigem Niederschlag ausgegeben.

Zu Beginn des Auftretens von unterkühltem flüssigem Niederschlag auf die Niederschlagauftrefffläche kann der Niederschlag trotz seiner Unterkühlung auf der Niederschlagauftrefffläche flüssig bleiben. Dies gilt beispielsweise bei Niesel, wenn die Fallgeschwindigkeit des Niederschlags zu niedrig ist, um die Kristallisation durch Erschütterung beim Auftreffen auf die Niederschlagauftrefffläche auszulösen, oder dann, wenn die Niederschlagauftrefffläche nach längerem Regen sehr sauber ist und entsprechend nur wenige Verunreinigungen als potentielle Kristallisationskeime für das Gefrieren des unterkühlten flüssigen Niederschlags vorhanden sind. Bei dem erfindungsgemäßen Verfahren kann die Niederschlagauftrefffläche daher zu einer hin- und hergehenden Bewegung angeregt, insbesondere im Sinne einer Erschütterung angestoßen werden, um den unterkühlten flüssigen Niederschlag auf der Niederschlagauftrefffläche zum Gefrieren zu veranlassen. Dass eine Erschütterung unterkühlte Flüssigkeiten dazu bringen kann, zu gefrieren, ist ein grundsätzlich bekanntes Phänomen. Dieses grundsätzlich bekannte Phänomen kann bei dem erfindungsgemäßen Verfahren dazu ausgenutzt werden, um dann, wenn der Anstieg der Temperatur mit der angeregten Bewegung der Niederschlagauftrefffläche einsetzt, die Warnung vor unterkühltem flüssigem Niederschlag bezüglich ihrer Signifikanz hochzustufen. Zu dem Anstieg der gemessenen Temperatur unterhalb von 0 °C infolge der angeregten Bewegung der Niederschlagauftrefffläche mit darauf befindlichem Niederschlag kommt es nur dann, wenn der Niederschlag unterkühlter flüssiger Niederschlag ist, der infolge der angeregten Bewegung gefriert und dadurch Kristallisationswärme freisetzt.

Wenn hier und in den Patentansprüchen davon die Rede ist, dass erfasst wird, ob Niederschlag auf die Niederschlagauftrefffläche auftritt, so ist es dafür zwar möglich, aber nicht erforderlich, ein Auftreffen des Niederschlags auf die Niederschlagauftrefffläche zu erfassen. Es ist beispielsweise aber auch ausreichend zu erfassen, ob und insbesondere wie viel Niederschlag sich auf der Niederschlagauftrefffläche befindet und aus dabei festgestellten Veränderungen darauf zu schließen, dass zwischenzeitlich Niederschlag auf die Niederschlagauftrefffläche aufgetreten ist.

Wenn hier und in den Patentansprüchen davon die Rede ist, dass der Anstieg der Temperatur unterhalb von 0 °C infolge von auftretendem und insoweit erfasstem Niederschlag auftritt, so schließt dies also nicht nur den Fall ein, dass der Anstieg der Temperatur zumindest nahezu quasi zeitgleich mit dem auftretenden Niederschlag auftritt. Vielmehr kann der Anstieg der Temperatur gegenüber dem auftretenden Niederschlag verzögert sein, insbesondere weil das Gefrieren des Niederschlags verzögert einsetzt und eventuell erst angeregt werden muss. In jedem Fall wird der Temperaturanstieg bei der Erfindung mit dem auftretenden Niederschlag korreliert, um unterkühlten flüssigen Niederschlag zu erkennen.

Bei dem erfindungsgemäßen Verfahren können auch andere oder weitere Hinweise auf unterkühlten flüssigen Niederschlag erkannt und zum Hochstufen der Warnung vor unterkühltem flüssigem Niederschlag bezüglich ihrer Signifikanz genutzt werden. Ein solcher Hinweis ist, dass der Anstieg der gemessenen Temperatur des Objekts bezogen auf eine Menge des erfassten Niederschlags einen vorgegebenen Grenzwert übersteigt. Grundsätzlich kann auch nicht unterkühlter flüssiger Niederschlag, der eine höhere Temperatur als das Objekt aufweist, beim Auftreffen auf die Niederschlagauftrefffläche zu einem Anstieg der Temperatur des Objekts führen. Sobald die gemessene Temperatur auf >0°C ansteigt, ist die Warnung vor unterkühltem flüssigen Niederschlag bezüglich ihrer Signifikanz herabzustufen. Aber auch dann, wenn nicht unterkühlter flüssiger Niederschlag auf der Niederschlagauftrefffläche gefriert und dabei dieselbe Kristallisationswärme freigesetzt wird, wie beim Gefrieren von unterkühltem flüssigen Niederschlag, ergeben sich erfassbare Unterschiede. Die Geschwindigkeit, mit der unterkühlter flüssiger Niederschlag gefriert, ist sehr viel größer als diejenige mit der nicht unterkühlter flüssiger Niederschlag gefriert. Bei unterkühltem flüssigem Niederschlag beginnt das Gefrieren spontan im gesamten Volumen entlang dendritischer Strukturen innerhalb des jeweiligen Tropfens, bei nicht unterkühltem flüssigem Niederschlag zunächst nur an dessen Grenzfläche zu der Niederschlagauftrefffläche. Dadurch wird beim Gefrieren von unterkühltem flüssigem Niederschlag immer so viel Kristallisationswärme freigesetzt, dass der gesamte jeweilige Tropfen bis unmittelbar an die Niederschlagauftrefffläche auf 0 °C erwärmt und dort gehalten wird, bis die Kristallisationswärme vollständig dissipiert, d. h. an das Objekt und die sonstige Umgebung des jeweiligen Tropfens abgegeben ist. Bei nicht unterkühltem flüssigem Niederschlag steigt die Temperatur an der Niederschlagauftrefffläche allenfalls kurzzeitig bis auf 0 °C an. Die 0 °C-Isotherme verschiebt sich schnell mit der Grenzschicht des aufwachsenden Eises von der Niederschlagauftrefffläche weg in den jeweiligen Tropfen, und die Temperatur an der Niederschlagauftrefffläche sinkt genauso schnell wieder auf unter 0 °C ab. Daher resultiert bei unterkühltem flüssigem Niederschlag ein größerer Anstieg der gemessenen Temperatur des Objekts während des Gefrierens des Niederschlags. Wenn man die Wärmekapazität eines verwendeten Temperatursensors vernachlässigt, hängen die Geschwindigkeit und die Höhe des Anstiegs im Wesentlichen von der Relativlage des Orts des Messens der Temperatur des Objekts zu dem Ort des Gefrierens des Niederschlags auf der Niederschlagauftrefffläche und von dem Verlauf der Temperatur an der Niederschlagauftrefffläche ab. Dabei kommt es für die Relativlage auf eine resultierende Temperaturleitfähigkeit zwischen dem Ort des Messens und dem Ort des Gefrieren relativ zu einer Temperaturleitfähigkeit zwischen dem Ort des Messens und dem restlichen Objekt und darauf einwirkenden Wärmesenken, wie beispielsweise die kalte Luft in der Umgebung des Objekts, an. Der Verlauf der Temperatur an der Niederschlagauftrefffläche wird neben der Art des Niederschlags - unterkühlt oder nicht - durch die Menge des Niederschlags bestimmt. Wenn der auf die Menge des erfassten Niederschlags bezogene Anstieg der Temperatur einen Grenzwert übersteigt, der von nicht unterkühltem Niederschlag nicht erreicht wird, ist dies ein starker Hinweis auf das Vorliegen von unterkühltem flüssigem Niederschlag und daher eine Basis dafür, die Warnung vor unterkühltem flüssigem Niederschlag bezüglich ihrer Signifikanz hochzustufen. Um eine hohe Sensibilität zur Unterscheidung von unterkühltem und nicht unterkühltem Niederschlag zu erreichen, sollte die Temperaturleitfähigkeit zwischen dem Ort des Messens und dem Ort des Gefrierens relativ zu der Temperaturleitfähigkeit zwischen dem Ort des Messens und dem restlichen Objekt und darauf einwirkenden Wärmesenken möglichst groß sein.

Auch dann, wenn der Anstieg der Temperatur auf ein Temperaturplateau mit einer Plateautemperatur 0 °C führt, ist dies eine sinnvolle Basis, um die Warnung vor unterkühltem flüssigem Niederschlag bezüglich ihrer Signifikanz hochzustufen. Unmittelbar dort, wo der unterkühlte flüssige Niederschlag auf die Niederschlagauftrefffläche auftrifft, hebt die bei seinem Gefrieren frei werdende Kristallisationswärme die Temperatur auf ein Temperaturplateau mit einer Plateautemperatur von 0 °C an. Bei einer im Abstand dazu durchgeführten Messung der Temperatur kommt es hingegen aus den obigen Gründen durch die wirksamen Temperaturleitfähigkeiten zu einem Temperaturplateau mit einer Plateautemperatur von kleiner als 0°C. Wie lange das Temperaturplateau von der gemessenen Temperatur gehalten wird, hängt dabei von der effektiven Wärmekapazität des Objekts und der Menge an unterkühltem flüssigem Niederschlag sowie von den Umgebungsbedingungen ab. Zu diesen Umgebungsbedingungen zählen beispielsweise Luftfeuchtigkeit und Windgeschwindigkeit, die die Geschwindigkeit einer Wiederabsenkung der Temperatur bestimmen. Wenn nach dem Anstieg der Temperatur infolge des auftretenden Niederschlags auf eine Plateautemperatur von kleiner als 0 °C ein Wiederabfallen der Temperatur auftritt, kann dies also als weiterer Hinweis auf unterkühlten flüssigen Niederschlag gewertet werden, der ein Hochstufen der Warnung bezüglich ihrer Signifikanz rechtfertigt.

Es wurde bereits angesprochen, dass unterkühlter flüssiger Niederschlag in einem typischen Bereich der Lufttemperatur auftritt. Daher ist es bei dem erfindungsgemäßen Verfahren vorteilhaft, eine Lufttemperatur in der Umgebung des Objekts zu messen und bei einer gemessenen Lufttemperatur in einem Bereich von -20 °C bis -2 °C und insbesondere in einem Bereich von - 10 °C bis -5 °C, die Warnung vor unterkühltem flüssigem Niederschlag bezüglich ihrer Signifikanz hochzustufen.

Neben dem zeitlichen Verlauf des Anstiegs und auch eines sich anschließenden Wiederabfallens der gemessenen Temperatur kann bei dem erfindungsgemäßen Verfahren ein räumlicher Verlauf der gemessenen Temperatur längs, d.h. in der Ebene der Niederschlagauftrefffläche erfasst werden. Es versteht sich, dass hierfür die Temperatur an verschiedenen Punkten des Objekts, die vorzugsweise längs der Niederschlagauftrefffläche verteilt sind, gemessen werden muss. Dann kann bei einem lokal beginnenden und mit der Zeit längs der Niederschlagauftrefffläche auslaufenden Anstieg der gemessenen Temperatur des Objekts die Warnung vor unterkühltem flüssigem Niederschlag bezüglich ihrer Signifikanz hochgestuft werden. Das räumliche Auslaufen des Anstiegs der gemessenen Temperatur längs der Niederschlagauftrefffläche ist ein Indiz für den lokalen Eintrag von Kristallisationswärme im Ort des Auftreffens bzw. Gefrierens des Niederschlags auf die bzw. auf der Niederschlagauftrefffläche.

Bei dem erfindungsgemäßen Verfahren kann das Objekt nach dem erkannten Anstieg der Temperatur unterhalb von 0 °C infolge von auftretendem Niederschlag mit einer definierten Leistung erwärmt werden. Wenn dann ein Plateau eines resultierenden weiteren Anstiegs der gemessenen Temperatur des Objekts bei 0 °C auftritt, ist dies ein Beleg dafür, dass Eis auf der Niederschlagauftrefffläche auftaut und dafür die zuvor an das Objekt abgegebene Kristallisationswärme als Schmelzwärme wieder in den Niederschlag eingetragen werden muss, bevor sich die Niederschlagauftrefffläche über 0 °C erhöhen kann. Damit ist ein Indiz für unterkühlten flüssigen Niederschlag gegeben, der das Hochsetzen der Warnung bezüglich ihrer Signifikanz rechtfertigt.

In einer Ausführungsform des erfindungsgemäßen Verfahrens wird ein Referenzobjekt mit einer weiteren Niederschlagauftrefffläche auf einer weiteren Temperatur oberhalb der Lufttemperatur in der Umgebung des Objekts und des Referenzobjekts gehalten, und es wird erfasst, ob Niederschlag auf die weitere Niederschlagauftrefffläche auftritt. Die weitere Niederschlagauftrefffläche auf der über die Lufttemperatur erhöhten weiteren Temperatur ist vor Betauen geschützt, so dass sich Tau oder Reif, d. h. kondensierender Wasserdampf, und insbesondere Raureif, d. h. resublimierender Wasserdampf, nicht auf ihr niederschlagen. Wenn dann erfasst wird, dass Niederschlag auf die Niederschlagauftrefffläche des nicht erwärmten Objekts auftritt, aber kein Niederschlag auf die weitere Niederschlagauftrefffläche auftritt, handelt es sich bei dem Niederschlag um Tau, Reif oder Raureif. Wenn zugleich infolge des auftretenden Niederschlags auf das Objekt der Anstieg der Temperatur unterhalb von 0 °C beobachtet wird, handelt es sich bei dem Niederschlag um Raureif. Entsprechend wird bei dieser Ausführungsform des erfindungsgemäßen Verfahrens dann eine Warnung vor Raureif ausgegeben.

Bei dem erfindungsgemäßen Verfahren kann das Objekt zudem auf über 0 °C erwärmt und erfasst werden, ob sich dabei eine Erhöhung einer elektrischen Kapazität und/oder einer elektrischen Leitfähigkeit des Objekts an der Niederschlagauftrefffläche ergibt. Wenn sich die Erhöhung ergibt, kann hieraus darauf geschlossen werden, dass sich Schnee oder Eis auf der Niederschlagauftrefffläche befand. Beim Aufschmelzen von Eis oder Schnee auf der erwärmten Niederschlagauftrefffläche erhöht sich die Dielektrizitätskonstante, wodurch sich die elektrische Kapazität des Objekts an der Niederschlagauftrefffläche erhöht. Die elektrische Leitfähigkeit des Objekts an der Niederschlagauftrefffläche erhöht sich ebenfalls.

Das Erfassen von Auftreten von Niederschlag auf die Niederschlagauftrefffläche kann bei dem erfindungsgemäßen Verfahren auf unterschiedliche Weise erfolgen. Hierzu zählt eine fortlaufende Erfassung der Masse des die Niederschlagauftrefffläche umfassenden Objekts. Bevorzugt ist es bei dem erfindungsgemäßen Verfahren aber, den Niederschlag auf die Niederschlagauftrefffläche dadurch zu erfassen, dass erfasst wird, ob sich eine elektrische Kapazität und/oder eine elektrische Leitfähigkeit des Objekts an der Niederschlagauftrefffläche ändert. Entsprechende Messanordnungen zur Erfassung von Niederschlag sind grundsätzlich bekannt. Aus einer Größe der Änderung der elektrischen Kapazität und/oder der elektrischen Leitfähigkeit des Objekts an der Niederschlagauftrefffläche kann auf einen von dem erfassten Niederschlag benetzten Anteil der Niederschlagauftrefffläche und damit auf eine Menge des erfassten Niederschlags geschlossen werden. Dabei zeigt sich, dass auf der Niederschlagauftrefffläche gefrierender unterkühlter flüssiger Niederschlag zu einem sich mit seiner Menge stetig ändernden und ohne Hinzukommen von weiterem Niederschlag gleichbleibenden elektrischen Kapazität oder elektrischen Leitfähigkeit führt. Demgegenüber führt insbesondere über die Niederschlagauftrefffläche fließender Niederschlag, d. h. über die Niederschlagauftrefffläche fließendes Wasser zu einer Variation dieser Werte. Auch dieser Unterschied kann als Basis für ein Hochstufen der Warnung vor unterkühltem flüssigen Niederschlag bezüglich ihrer Signifikanz genutzt werden.

Bei dem erfindungsgemäßen Verfahren kann das Erfassen, ob Niederschlag auf die Niederschlagauftrefffläche auftritt, auch indirekt erfolgen, indem erfasst wird, ob sich die Temperatur des Objekts stufenweise ändert. Eine solche stufenweise Änderung weist auf eine Wärmeabfuhr oder einen Wärmeeintrag durch einzelne Tropfen des Niederschlags, insbesondere einen Eintrag von Kristallisationswärme durch das Gefrieren einzelner unterkühlter flüssiger Tropfen des Niederschlags hin. Im Gegensatz dazu führt Konvektionswärme oder-kälte sowie Verdampfungskälte zu einer stetigen Änderung der Temperatur des Objekts an der Niederschlagauftrefffläche. Zumindest bei unterkühltem flüssigem Niederschlag lässt sich aufgrund der vergleichsweise großen Kristallisationswärme aus einer Größe einer stufenweisen Änderung der Temperatur des Objekts auch auf eine Menge des auf die Niederschlagauftrefffläche auftretenden Niederschlags zurückschließen.

Eine erfindungsgemäße Vorrichtung zum Erkennen von unterkühltem flüssigem Niederschlag weist ein Objekt mit einer Niederschlagauftrefffläche, Temperaturmesseinrichtungen zum Messen einer Temperatur des Objekts, Niederschlagerfassungseinrichtungen zum Erfassen, ob Niederschlag auf die Niederschlagauftrefffläche auftritt und Auswerteeinrichtungen auf, die zum Erkennen eines Anstiegs der Temperatur unterhalb von 0 °C infolge von auftretendem Niederschlag und zur Durchführung des erfindungsgemäßen Verfahrens ausgebildet sind.

In einer Ausführungsform der erfindungsgemäßen Vorrichtung umfasst diese einen Aktuator, der an dem die Niederschlagauftrefffläche aufweisenden Objekt angreift und dazu ausgebildet ist, die Niederschlagauftrefffläche zu einer hin- und hergehenden Bewegung anzuregen. Insbesondere ist der Aktuator dazu ausgebildet, die Niederschlagauftrefffläche im Sinne einer Erschütterung anzustoßen, um darauf befindlichen flüssigen unterkühlten Niederschlag zum Gefrieren zu veranlassen. Besonders energieeffizient ist der Aktuator dann, wenn er das Objekt bei einer Eigenfrequenz, die durch die Elastizität des Objekts und/oder seiner Lagerung bestimmt ist, zu einer mechanischen Eigenschwingung anregt.

Die Temperaturmesseinrichtungen der erfindungsgemäßen Vorrichtung sind vorzugsweise zum lokalen Messen der Temperatur des Objekts nahe der Niederschlagauftrefffläche ausgebildet. Dazu können die Temperaturmesseinrichtungen ein sich längs der Niederschlagauftrefffläche erstreckendes Array von Temperatursensoren aufweisen. Konkret können diese Temperatursensoren an einer der Niederschlagauftrefffläche abgekehrten Unterseite des flächig ausgebildeten Objekts angeordnet sein.

Die Temperaturmesseinrichtungen können zusätzlich zum Messen einer Lufttemperatur in der Umgebung des Objekts ausgebildet sein. Dazu weisen die Temperaturmesseinrichtungen vorzugsweise einen vor Niederschlag geschützten Lufttemperatursensor auf. Anders als die Temperatursensoren, die die Temperatur des Objekts erfassen, wird der Temperatursensor dann nicht durch einen Wärmeeintrag oder eine Wärmeabfuhr infolge von Niederschlag beeinflusst.

Die erfindungsgemäße Vorrichtung kann weiterhin Heizvorrichtungen aufweisen, um das Objekt, insbesondere nach dem erkannten Anstieg der Temperatur unterhalb von 0 °C bei auftretendem Niederschlag, mit einer definierten Leistung zu erwärmen. Wie schon erläutert wurde, lässt ein aus diesem Eintrag von Wärme resultierender Verlauf Rückschlüsse darauf zu, ob die Niederschlagauftrefffläche vereist ist, weil dann bei 0 °C ein erheblicher Wärmeeintrag durch die Schmelzwärme aufgezehrt wird. Weiterhin ermöglicht das Enteisen und Aufschmelzen von Schnee auf der Sensorfläche die Wiederherstellung der Messfähigkeit des Sensors.

Alternativ oder zusätzlich kann die erfindungsgemäße Vorrichtung Heizvorrichtungen aufweisen, um ein Referenzobjekt mit einer definierten Leistung zu erwärmen. Dieses Referenzobjekt kann dabei vollständig dem Objekt mit der Niederschlagauftrefffläche entsprechen. In jedem Fall weist das Referenzobjekt eine weitere Niederschlagauftrefffläche auf, und weitere Temperaturmesseinrichtungen, die zum Messen einer Temperatur des Referenzobjekts ausgebildet sind, und weitere Niederschlagserfassungseinrichtungen, die zum Erfassen ausgebildet sind, ob Niederschlag auf die weitere Niederschlagauftrefffläche auftritt, sind an die Auswerteeinrichtungen angeschlossen. Wie oben zu dem erfindungsgemäßen Verfahren erläutert wurde, kann mit Hilfe eines solchen Referenzobjekts Tau, Reif und Raureif erkannt und zwischen Tau und Reif einerseits sowie Raureif andererseits unterschieden werden.

Bei der erfindungsgemäßen Vorrichtung ist die Niederschlagauftrefffläche typischerweise unter einem Neigungswinkel zur Horizontalen ausgerichtet, der zwar ein Anhaften von Niederschlag erlaubt, aber verhindert, dass größere Mengen an flüssigem Niederschlag auf der Niederschlagauftrefffläche stehenbleiben. Grundsätzlich kann der Neigungswinkel in einem Bereich zwischen 10° und 80° liegen. Vorzugsweise beträgt er zwischen 50° und 70°, also etwa 60° zur Horizontalen.

Die Niederschlagerfassungseinrichtung der erfindungsgemäßen Vorrichtung können dazu ausgebildet sein, eine elektrische Kapazität und/oder eine elektrische Leitfähigkeit des Objekts an der Niederschlagauftrefffläche zu erfassen. Grundsätzlich können die Niederschlagerfassungseinrichtungen, wie bereits erwähnt, auch dazu ausgebildet sein, eine Masse des Objekts mit der Niederschlagerfassungseinrichtung zu erfassen, um daraus auf eine Menge des Niederschlags auf der Niederschlagauftrefffläche zu schließen. Die Erfassung der Menge des Niederschlags über die elektrische Kapazität und/oder die elektrische Leitfähigkeit des Objekts an der Niederschlagauftrefffläche lässt zusätzlich Rückschlüsse auf die Verteilung des Niederschlags über die Niederschlagauftrefffläche zu, zumindest dann, wenn die elektrische Kapazität und/oder die elektrische Leitfähigkeit mit deutlicher Auflösung längs der Niederschlagauftrefffläche erfasst wird. Die elektrische Kapazität kann insbesondere erfasst werden, indem die Schwingfrequenz eines diese Kapazität umfassenden RC-Oszillators erfasst wird, die linear vom Kehrwert der Kapazität abhängt.

Vorteilhafte Weiterbildungen der Erfindung ergeben sich aus den Patentansprüchen, der Beschreibung und den Zeichnungen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Lufttemperatursensor die Rede ist, ist dies so zu verstehen, dass genau ein Lufttemperatursensor, zwei Lufttemperatursensoren oder mehr Lufttemperatursensoren vorhanden sind. Die in den Patentansprüchen angeführten Merkmale können durch weitere Merkmale ergänzt werden oder die einzigen Merkmale sein, die das jeweilige Verfahren oder die jeweilige Vorrichtung aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine erste Ausführungsform einer erfindungsgemäßen Vorrichtung zur Durchführung des erfindungsgemäßen Verfahrens.
- **Fig. 2**: ist eine Rückansicht einer Sensorplatine der Vorrichtung gemäß Fig. 1.
- **Fig. 3**: ist eine Auftragung verschiedener Messgrößen, die von der Vorrichtung gemäß Fig. 1 erfasst werden, wenn unterkühlter flüssiger Regen auf deren Sensorplatine auftrifft und dort gefriert.
- **Fig. 4**: ist eine perspektivische Ansicht einer Sensorplatine einer anderen erfindungsgemäßen Vorrichtung.
- **Fig. 5**: ist eine schematische Draufsicht auf eine Sensorplatine einer weiteren Ausführungsform der erfindungsgemäßen Vorrichtung.
- **Fig. 6**: ist ein Schnitt durch die Sensorplatine gemäß Fig. 5 längs einer in Fig. 5 eingezeichneten Schnittlinie VI-VI.
- **Fig. 7**: ist eine schematische Draufsicht auf noch eine Sensorplatine noch einer weiteren Ausführungsform der erfindungsgemäßen Vorrichtung.
- **Fig. 8**: ist ein Schnitt durch die Sensorplatine gemäß Fig. 7 längs einer in Fig. 7 eingezeichneten Schnittlinie VIII-VIII; und
- **Fig. 9**: ist ein Flussdiagramm einer Ausführungsform des erfindungsgemäßen Verfahrens.

### FIGURENBESCHREIBUNG

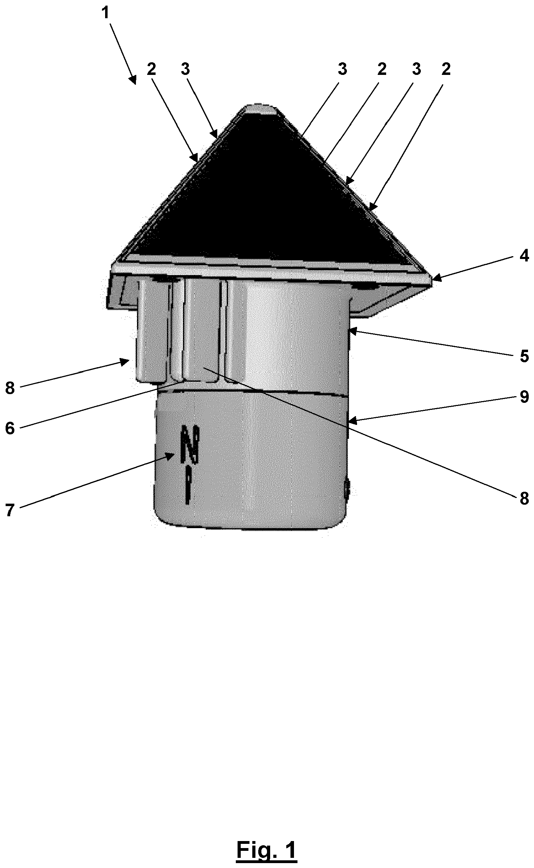

Die in **Fig. 1** in einer leicht perspektivischen Seitenansicht gezeigte Vorrichtung 1 dient zum Erfassen meteorologischer Daten, insbesondere in Bezug auf Niederschlag, der auf Niederschlagauftreffflächen 2 der Vorrichtung 1 auftrifft. An ihrer Oberseite weist die Vorrichtung 1 eine pyramidenförmige Anordnung von insgesamt vier Niederschlagauftreffflächen 2 auf. Die Neigung jeder der Niederschlagauftreffflächen 2 zur Horizontalen beträgt 60°. Dadurch kann Niederschlag an ihnen anhaften. Größere Mengen an flüssigem Niederschlag laufen aber von den Niederschlagauftreffflächen 2 nach unten ab. Die Niederschlagauftreffflächen 2 sind die äußeren Oberflächen von Sensorplatinen 3, die in Öffnungen eines starren Rahmens 4 angeordnet und dort an dem Rahmen 4 abgestützt sind. Der starre Rahmen 4 schließt oben an ein Gehäuse 5 der Vorrichtung an, in dem sich Auswerteeinrichtungen befinden und an dessen Außenseite ein Lufttemperatursensor 6 angeordnet ist. Durch den Rahmen 4 mit den darin angeordneten Sensorplatinen 3 ist der Lufttemperatursensor 6 nach oben vor Niederschlag geschützt. Schutz vor Sonneneinstrahlung erfährt der Lufttemperatursensor 6 dadurch, dass er im Betrieb der Vorrichtung 1 nach Norden ausgerichtet wird, siehe eine Himmelsrichtungsanzeige 7 an der Vorrichtung 1. Um ihn vor Wind und angewehtem Niederschlag zu schützen, ist der Lufttemperatursensor 6 zudem in Umfangsrichtung um das Gehäuse 5 zwischen Blenden 8 angeordnet. Nach unten schließt an das Gehäuse 5 ein Anschlussbereich 9 der Vorrichtung mit hier nicht näher gezeigten mechanischen und elektrischen Anschlüssen an.

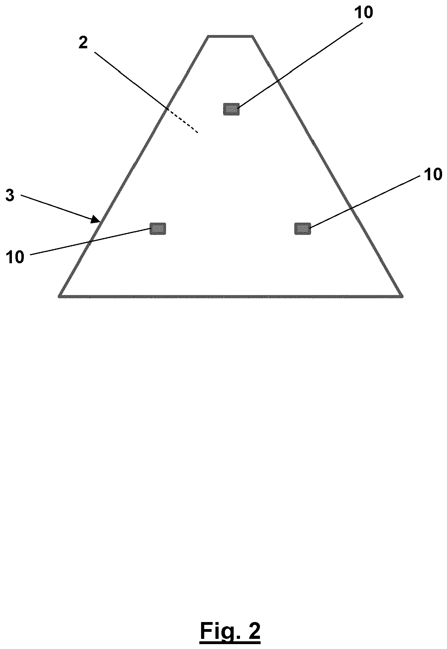

Die in Fig. 2 gezeigte Rückansicht einer Sensorplatine 3 gemäß Fig. 1 lässt eine über die Niederschlagauftrefffläche 2 verteilte Anordnung von hier drei Temperatursensoren 10 erkennen. Mit den Temperatursensoren 10 wird die Temperatur der Sensorplatine 3 als Objekt mit der Niederschlagauftrefffläche 2 lokal erfasst. Zusätzlich wird mit hier nicht dargestellten Niederschlagserfassungseinrichtungen eine Benetzung der Niederschlagauftrefffläche 2 mit Niederschlag und damit das Auftreten von Niederschlag auf die Niederschlagauftrefffläche 2 erkannt.

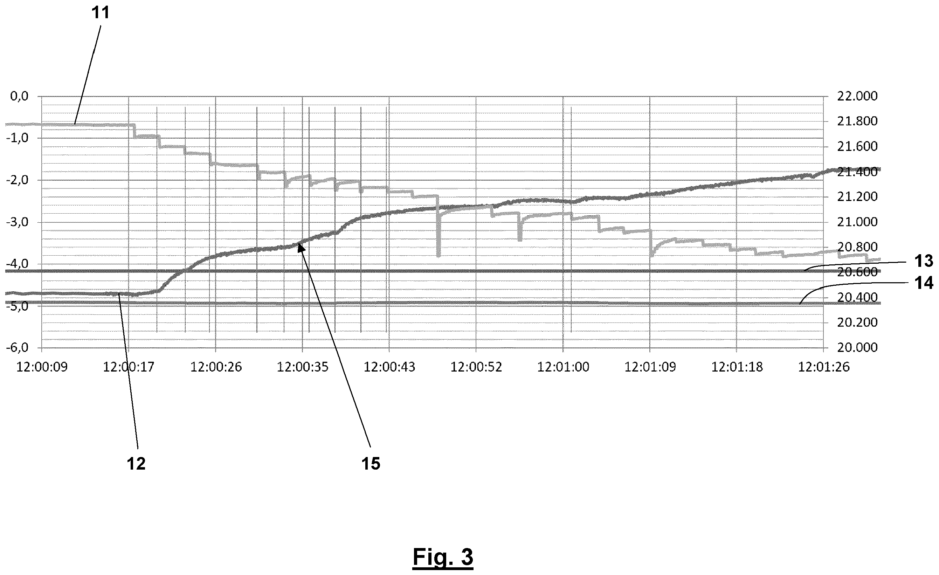

In Fig. 3 ist für einen Zeitraum von etwa 30 Sekunden, in dem insgesamt 12 Tropfen aus unterkühltem flüssigem Wasser in einem dem oberen der in Fig. 2 gezeigten Temperatursensoren gegenüberliegenden Bereich der Niederschlagauftrefffläche 2 auf die unter einem Winkel von 60° zur Horizontalen ausgerichtete Sensorplatine 3 auftrafen, der Verlauf verschiedener Größen aufgetragen. Dabei ist der Zeitpunkt des Auftreffens jedes der 12 Tropfen durch eine gestrichelte vertikale Linie angezeigt. Die in Fig. 3 oben verlaufende Linie zeigt den Verlauf einer Schwingfrequenz 11 eines RC-Oszillators an, der eine an der Niederschlagauftrefffläche 2 ausgebildete elektrische Kapazität umfasst. Durch die Benetzung der Niederschlagauftrefffläche 2 mit dem auftretenden Niederschlag steigt diese elektrische Kapazität an und sinkt die Schwingfrequenz 11 des elektrischen RC-Oszillators entsprechend ab. Eine in Fig. 3 ansteigende Linie zeigt den Verlauf der Temperatur 12 der Sensorplatine 3 an, die mit dem oberen der drei Temperatursensoren 10 gemäß Fig. 2 gemessen wurde. Eine waagerechte Linie gibt eine Wassertemperatur des unterkühlten flüssigen Wassers vor dem Auftreffen auf die Niederschlagauftrefffläche 2 an; und eine weitere waagerechte Linie 14 gibt die Lufttemperatur in der Umgebung der Sensorplatine 3 an, wie sie bei der Vorrichtung 1 gemäß Fig. 1 mit dem Lufttemperatursensor 6 erfasst wird. Wie die stufenweise abfallende Schwingfrequenz 11 anzeigt, steigt mit dem Auftreffen jedes der 12 Tropfen auf die Niederschlagauftrefffläche 2 deren Benetzung an. Konkret ist die ansteigende Benetzung eine solche mit Eis, zu dem das unterkühlte flüssige Wasser auf der Niederschlagauftrefffläche 2 gefriert. Dieses Gefrieren setzt Kristallisationswärme frei, die zu einer Erhöhung der Temperatur 12 der Sensorplatine 3 im Bereich des Auftreffens des jeweiligen Tropfens führt. Entsprechend steigt die Linie 21 nach dem Gefrieren jedes der 12 auf die Niederschlagauftrefffläche 2 auftreffenden Tropfen an. Dieser Anstieg 15 tritt bei Temperaturen unterhalb von 0 °C auf und nähert sich an 0 °C als die Temperatur an, auf die sich die Tropfen beim Gefrieren infolge der dabei freigesetzten Kristallisationswärme aufwärmen. Der Anstieg 15 unterhalb von 0 °C, der schnell auf das durch die abfallende Schwingfrequenz 11 angezeigte Auftreffen der Tropfen auf die Niederschlagauftrefffläche 2 folgt, ist ein klares Indiz für das Vorliegen von unterkühltem flüssigem Niederschlag, so dass die Auswerteeinrichtungen der Vorrichtung 1 ein entsprechendes Warnsignal ausgeben.

Mit dem Auftreffen jedes der 12 Tropfen sinkt die Schwingfrequenz 11 grundsätzlich stufenförmig ab. Unmittelbar nach dem Auftreffen einzelner der 12 Tropfen fällt die Schwingfrequenz 11 jedoch zunächst stärker ab, bevor sie sich auf einem über diesem Anfangsabfall liegenden Niveau stabilisiert. Dies ist wohl darauf zurückzuführen, dass der von dem jeweiligen Tropfen benetzte Anteil der Niederschlagauftrefffläche 2 direkt nach seinem Auftreffen etwas größer ist, bevor sich der jeweilige Tropfen noch vor seinem Gefrieren auf der eher hydrophoben Niederschlagauftrefffläche 2 etwas zusammenzieht.

Fig. 3 lässt eindeutig erkennen, dass die durch das Gefrieren jedes der 12 Tropfen an der Niederschlagauftrefffläche 2 freigesetzte Kristallisationswärme trotz der Wärmekapazität der Sensorplatine 3 ausreichend ist, um zu einem auflösbaren Anstieg der Temperatur auf der Rückseite der Sensorplatine 3 zu führen, der mit einem der Temperatursensoren 10 gemäß Fig. 2 erfasst werden kann. Es versteht sich, dass die Wärmekapazität der Sensorplatine zu begrenzen ist, um diesen Effekt zu beobachten. Es sind aber keine besonderen Maßnahmen, d. h. keine besonders niedrige Wärmekapazität der Sensorplatine erforderlich.

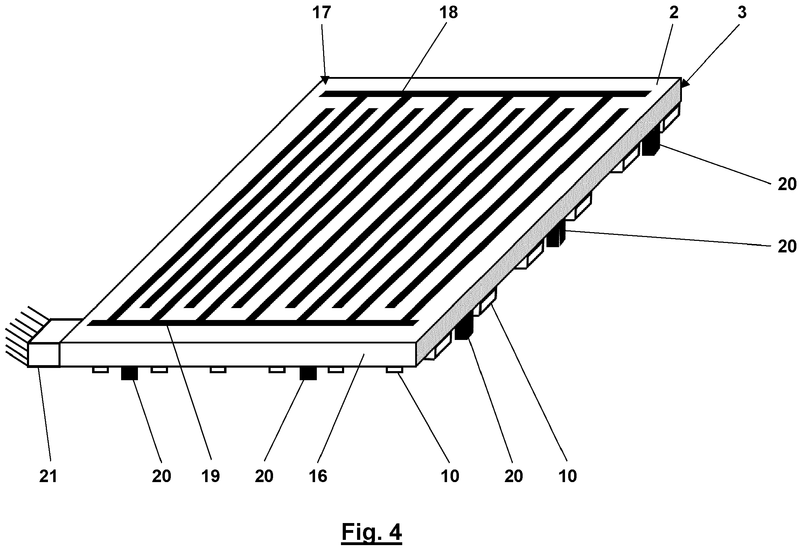

**Fig. 4** zeigt eine Sensorplatine 3 einer anderen erfindungsgemäßen Vorrichtung. Diese Sensorplatine 3 hat zwar eine andere, d. h. keine dreieckige, sondern eine rechteckige geometrische Grundform setzt aber grundsätzlich dieselben Messprinzipien wie die Sensorplatine 3 gemäß den Figuren 1 und 2 um. Die Sensorplatine 3 gemäß Fig. 4 basiert konkret auf einem Substrat 16 aus Aluminiumoxid mit einer typischen Dicke im Bereich von 0,2 bis 1 mm und mit einer typischerweise 5 bis 15 µm starken Glaspassivierung seiner Oberflächen. Unter der Glaspassivierung der Niederschlagauftrefffläche 2 ist eine Sensoranordnung 17 mit zwei kammartig und längs der Niederschlagauftrefffläche 2 ineinandergreifenden aber dabei einen Abstand zueinander einhaltenden Elektroden 18 und 19 ausgebildet. Die elektrische Kapazität zwischen den beispielsweise aus einer Silberpalladiumlegierung ausgebildeten Elektroden 18 und 19, die durch eine Benetzung der Niederschlagauftrefffläche 2 mit Wasser in Folge von Niederschlag beeinflusst wird, bestimmt die Schwingfrequenz des hier nicht weiter dargestellten RC-Oszillators der Niederschlagserfassungseinrichtungen. Auf der Unterseite des Substrats 16 sind Temperatursensoren 10 und Heizelemente 20 angeordnet. Die Heizelemente 20 sind Teil von Heizeinrichtungen, mit denen die Sensorplatine 3 mit definierter Leistung erwärmt werden kann. Wenn bei einem Erwärmen der Sensorplatine 3 von unterhalb 0 °C ein Temperaturplateau bei 0 °C auftritt, ist dies ein Hinweis darauf, dass die Niederschlagauftrefffläche 2 vereist ist und das Eis erst dann abtaut, wenn die nötige Schmelzwärme eingetragen wurde. Diese nötige Schmelzwärme ist genauso groß wie die beim Gefrieren freigesetzte Kristallisationswärme. Mit den Heizelementen 20 kann eine von mehreren Sensorplatinen 3 zudem als Referenzobjekt auf eine Temperatur etwas, d. h. wenige Kelvin oberhalb der Lufttemperatur erwärmt und dort gehalten werden. So wird diese Sensorplatinen 3 mit einem Betauungsschutz versehen und wenn dann nur Niederschlag auf eine andere nicht mit den Heizelementen 20 über die Lufttemperatur erwärmte Sensorplatine 3 auftritt, kann auf das Auftreten von Tau oder Reif geschlossen werden. Raureif liegt dann vor, wenn sich mit dem Niederschlag nur auf die nicht mit den Heizelementen 20 erwärmte Sensorplatine 3 dennoch der Temperaturanstieg 15 unterhalb von 0 °C einstellt. Die Temperatursensoren 10 sind in einem flächigen Raster auf der Rückseite des Substrats 16 angeordnet. Dadurch ist in der Nähe jedes Punkts der Niederschlagauftrefffläche 2 ein Temperatursensor 10 vorhanden. Jeder auf die Niederschlagauftrefffläche 2 auftreffende Tropfen aus unterkühltem flüssigem Wasser, das auf der Niederschlagauftrefffläche 2 gefriert, führt also zu einer lokalen Temperaturerhöhung des Substrats 16, die zumindest am Ort eines der Temperatursensoren 10 so groß ist, dass sie sicher erfasst werden kann. Auch die Verteilung der Temperaturerhöhung über der Fläche des Substrats 16, deren genauer Verlauf von der Wärmekapazität und Temperaturleitfähigkeit des Substrats 16 abhängt, ist ein Hinweis darauf, dass ein Tropfen von unterkühltem flüssigem Niederschlag auf die Niederschlagauftrefffläche 2 auftraf und dort gefror.

Um sicherzustellen, dass unterkühlter flüssiger Niederschlag auf der Niederschlagauftrefffläche 2 gefriert, ist ein Aktuator 21 vorgesehen, der hier an einer Seitenkante des Substrats angreift und der das Substrat 16 zu hin- und hergehenden Bewegungen anregt. Diese Bewegungen führen zu einer Erschütterung Niederschlagauftrefffläche 2 und des darauf befindlichen unterkühlten flüssigen Niederschlags und lösen so ein Gefrieren des unterkühlten flüssigen Niederschlags aus. Der Aktuator 21 kann als mikroelektromechanisches System (MEMS) ausgebildet sein und die Sensorplatine 3 zu einer mechanischen Eigenschwingung bei einer durch ihre Elastizität und/oder elastische Lagerung bestimmten mechanischen Eigenfrequenz vorgesehen sein. Auf diese Weise wird mit geringem Energieaufwand eine ausreichende Erschütterung des Niederschlags auf der Niederschlagauftrefffläche 2 erreicht, um sein Gefrieren auszulösen.

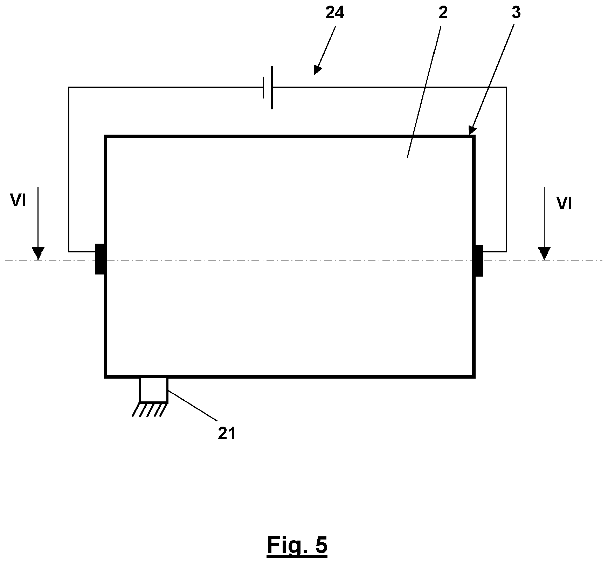

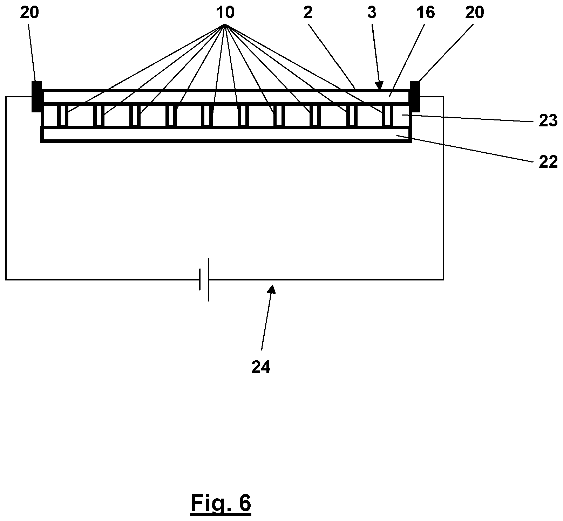

Bei der Ausführungsform der Sensorplatine 3 gemäß den **Fig. 5** **und** **6** ist das Substrat 16 aus einem temperaturleitfähigen und ausreichend witterungsbeständigen oder in seiner Oberfläche passivierten Metall in einer typischen Materialstärke von 10 µm bis 1 mm ausgebildet. Auf der Unterseite des Substrats 16 ist ein Array der Temperatursensoren 10 auf einer gemeinsamen Leiterplatte 22 angeordnet. Freiräume zwischen den Temperatursensoren 10 können mit Isolationsmaterial 23 ausgefüllt sein. Die Heizelemente 20 einer Heizeinrichtung 24 sind hier an einander gegenüberliegenden Seitenkanten des Substrats 16 angeordnet. Auch der Aktuator 21 greift wieder an einer solchen Seitenkante des Substrats 16 an.

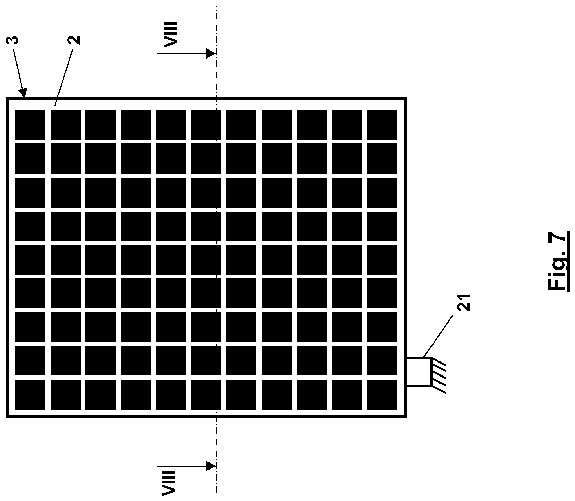

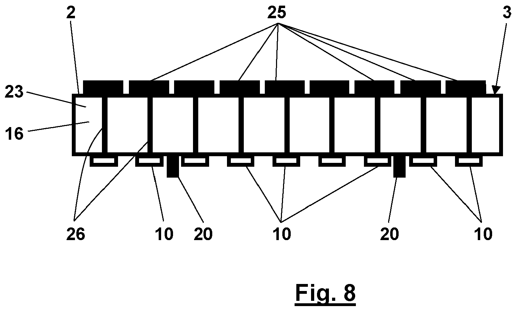

Bei der Ausführungsform der Sensorplatine 3 gemäß den **Fig. 7** **und** **8** ist das Substrat 16 aus Isolationsmaterial 23 ausgebildet. An der Niederschlagauftrefffläche 2 sind hoch temperaturleitfähige Kontaktpads 25 angeordnet, die über hoch temperaturleitfähige Verbindungen 26 mit den an der Unterseite des Substrats 16 angeordneten Temperatursensoren 10 in Verbindung stehen. Hierdurch ist die Wärmekapazität der Sensorplatine 3, die den erfassbaren Temperaturanstieg dämpft, auf die Wärmekapazität eines einzelnen Kontaktpads 25, einer einzelnen Verbindung 26 und eines einzelnen Temperatursensors 10 reduziert, wenn ein Tropfen aus unterkühltem Niederschlag auf eines der Kontaktpads 25 fällt und dort gefriert.

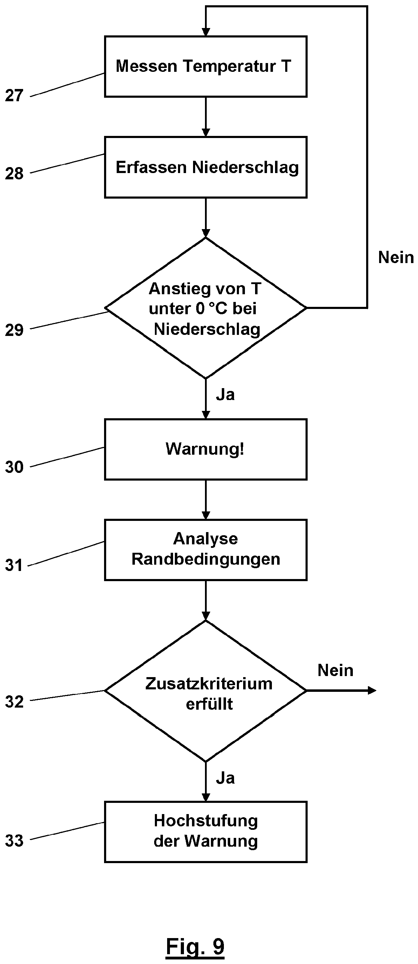

Das in **Fig. 9** in Form eines Flussdiagramms dargestellte erfindungsgemäße Verfahren beginnt mit dem Messen der Temperatur T der jeweiligen die Niederschlagauftrefffläche 2 umfassende Sensorplatine 3 in einem Schritt 27 und dem Erfassen von auf die Niederschlagauftrefffläche 2 auftretendem Niederschlag in einem Schritt 28. Wenn bei einer Überprüfung 29 ein Anstieg der gemessenen Temperatur T unterhalb von 0°C mit dem Erfassen von Niederschlag zeitlich zusammenhängt, wird in einem Schritt 30 eine Warnung vor unterkühltem flüssigen Niederschlag ausgegeben. Zusätzlich erfolgt in einem Schritt 31 eine Analyse von Randbedingungen, unter denen der Anstieg der gemessenen Temperatur T unter 0 °C erfasst wird. Wenn dann bei einer Überprüfung 32 festgestellt wird, dass Zusatzkriterien erfüllt sind, so dass weitere Hinweise auf das Vorliegen von unterkühltem flüssigem Niederschlag vorliegen, wird in einem Schritt 33 die Warnung vor unterkühltem flüssigem Niederschlag bezüglich ihrer Signifikanz hochgestuft. Wann solche Kriterien erfüllt sind, wurde bereits ausgeführt. Hierzu zählen, dass der Anstieg der gemessenen Temperatur erst mit einer angeregten Bewegung der Niederschlagauftrefffläche einsetzte, dass der Anstieg der gemessenen Temperatur bezogen auf eine Menge des erfassten Niederschlags einen vorgegebenen Grenzwert überstieg, dass der Anstieg der gemessenen Temperatur auf ein Temperaturplateau mit einer Plateautemperatur von ≤ 0 °C führte, dass eine gemessene Lufttemperatur in der Umgebung des Objekts in einem Bereich von -20 °C bis -2 °C oder spezieller in einem Bereich von -10 °C bis -5 °C lag, dass der Anstieg der gemessenen Temperatur der Sensorplatine lokal begann und längs der Niederschlagauftrefffläche auslief, dass ein Aufwärmen der Sensorplatine nach dem erkannten Anstieg der gemessenen Temperatur unterhalb von 0 °C in einen weiteren Anstieg der gemessenen Temperatur der Sensorplatine resultierte, der ein Temperaturplateau bei 0 °C aufwies, und dass sich eine elektrische Kapazität und/oder eine elektrische Leitfähigkeit an der Niederschlagauftrefffläche während des Anstiegs der gemessenen Temperatur stetig änderte oder während des Anstiegs der gemessenen Temperatur gleichblieb. Bei der Überprüfung, ob das letzte Kriterium erfüllt ist, sind kurzfristige Effekte auf die elektrische Kapazität und/oder den elektrischer Widerstand an der Niederschlagauftrefffläche, nicht zu berücksichtigen, die durch ein Sichwiederzusammenziehen von Tropfen aus flüssigem Niederschlag auf einer hydrophoben Niederschlagauftrefffläche oder durch ein erst erfolgendes Ausbreiten von flüssigem Niederschlag auf einer hydrophilen Niederschlagauftrefffläche bedingt sind. Bei einer konkreten Ausführungsform des erfindungsgemäßen Verfahrens kann auch nur überprüft werden, ob eine Auswahl dieser Kriterien erfüllt ist. Die weiteren Kriterien können unbeachtet bleiben.

### BEZUGSZEICHENLISTE

- 1: Vorrichtung
- 2: Niederschlagauftrefffläche
- 3: Sensorplatine, Objekt, Referenzobjekt
- 4: Rahmen
- 5: Gehäuse
- 6: Lufttemperatursensor
- 7: Himmelsrichtungsanzeige
- 8: Blende
- 9: Anschlussbereich
- 10: Temperatursensor
- 11: Schwingfrequenz
- 12: Temperatur
- 13: Wassertemperatur
- 14: Lufttemperatur
- 15: Anstieg
- 16: Substrat
- 17: Sensoranordnung
- 18: Elektrode
- 19: Elektrode
- 20: Heizelement
- 21: Aktuator
- 22: Leiterplatte
- 23: Isolationsmaterial
- 24: Heizeinrichtung
- 25: Kontaktpad
- 26: Verbindung
- 27: Schritt
- 28: Schritt
- 29: Überprüfung
- 30: Schritt
- 31: Schritt
- 32: Überprüfung
- 33: Schritt

## Patentansprüche

1. Verfahren zum Erkennen von unterkühltem flüssigem Niederschlag,
- wobei eine Temperatur (12) eines Objekts (3) mit einer Niederschlagauftrefffläche (2) gemessen wird und
- wobei erfasst wird, ob Niederschlag auf die Niederschlagauftrefffläche (2) auftritt, **dadurch gekennzeichnet, dass** bei einem Anstieg (15) der Temperatur (12) unterhalb von 0 °C infolge von auftretendem Niederschlag eine Warnung vor unterkühltem flüssigem Niederschlag ausgegeben wird.

2. Verfahren nach Anspruch 1, **dadurch gekennzeichnet, dass** die Niederschlagauftrefffläche (2) zu einer hin- und hergehenden Bewegung angeregt, vorzugsweise im Sinne einer Erschütterung angestoßen wird, und dass dann, wenn der Anstieg (15) der Temperatur (12) mit der angeregten Bewegung einsetzt die Warnung vor unterkühltem flüssigem Niederschlag bezüglich ihrer Signifikanz hochgestuft wird.

3. Verfahren nach einem der vorhergehenden Ansprüche, **dadurch gekennzeichnet, dass**
- dann, wenn der Anstieg der Temperatur (12) bezogen auf eine Menge des erfassten Niederschlags einen vorgegebenen Grenzwert übersteigt, und/oder
- dann, wenn der Anstieg (15) der Temperatur (12) auf ein Temperaturplateau mit einer Plateautemperatur von ≤ 0 °C führt,
die Warnung vor unterkühltem flüssigem Niederschlag bezüglich ihrer Signifikanz hochgestuft wird.

4. Verfahren nach einem der vorhergehenden Ansprüche, **dadurch gekennzeichnet, dass** eine Lufttemperatur (14) in der Umgebung des Objekts (3) gemessen wird und dass bei einer gemessenen Lufttemperatur (14) in einem Bereich von -20 °C bis -2 °C, vorzugsweise in einem Bereich von -10 ° C bis -5 °C die Warnung vor unterkühltem flüssigem Niederschlag bezüglich ihrer Signifikanz hochgestuft wird.

5. Verfahren nach einem der vorhergehenden Ansprüche, **dadurch gekennzeichnet, dass** bei einem lokal beginnenden und längs der Niederschlagauftrefffläche (2) auslaufenden Anstieg (15) der gemessenen Temperatur (12) des Objekts (3) die Warnung vor unterkühltem flüssigem Niederschlag bezüglich ihrer Signifikanz hochgestuft wird.

6. Verfahren nach einem der vorhergehenden Ansprüche, **dadurch gekennzeichnet, dass** das Objekt (3) nach dem erkannten Anstieg (15) der Temperatur (12) unterhalb von 0 °C bei auftretendem Niederschlag mit einer definierten Leistung erwärmt wird und dass bei einem Plateau eines resultierenden weiteren Anstieg der gemessenen Temperatur (12) des Objekts (3) bei 0 °C die Warnung vor unterkühltem flüssigem Niederschlag bezüglich ihrer Signifikanz hochgestuft wird.

7. Verfahren nach einem der vorhergehenden Ansprüche, **dadurch gekennzeichnet,**
- **dass** ein Referenzobjekt (3) mit einer weiteren Niederschlagauftrefffläche (2) auf einer weiteren Temperatur oberhalb einer Lufttemperatur (14) in der Umgebung des Objekts (3) und des Referenzobjekts (3) gehalten wird und erfasst wird, ob Niederschlag auf die weitere Niederschlagauftrefffläche (2) auftritt, wobei das Objekt (3) nicht erwärmt wird, und
- **dass** bei dem Anstieg (15) der Temperatur (12) unterhalb von 0 °C infolge von auftretendem Niederschlag auf das Objekt (3), wenn zugleich kein Niederschlag auf der weiteren Niederschlagauftrefffläche (2) des Referenzobjekts erfasst wird, eine Warnung vor Raureif ausgegeben wird.

8. Verfahren nach einem der vorhergehenden Ansprüche, **dadurch gekennzeichnet, dass** das Objekt (3) auf über 0 °C erwärmt wird und erfasst wird, ob sich dabei eine Erhöhung einer elektrischen Kapazität und/oder einer elektrische Leitfähigkeit des Objekts (3) an der Niederschlagauftrefffläche (2) ergibt, wobei dann, wenn sich die Erhöhung ergibt, darauf geschlossen wird, dass sich Schnee oder Eis auf der Niederschlagauftrefffläche (2) befand.

9. Vorrichtung (1) zum Erkennen von unterkühltem flüssigem Niederschlag mit
- einem eine Niederschlagauftrefffläche (2) aufweisenden Objekt (3),
- Temperaturmesseinrichtungen, die zum Messen einer Temperatur (12) des Objekts (3) ausgebildet sind,
- Niederschlagserfassungseinrichtungen, die zum Erfassen ausgebildet sind, ob Niederschlag auf die Niederschlagauftrefffläche (2) auftritt, und
- Auswerteeinrichtungen,
**dadurch gekennzeichnet, dass** die Auswerteeinrichtungen zum Erkennen eines Anstiegs der Temperatur unterhalb von 0 °C infolge von auftretendem Niederschlag und zur Durchführung des Verfahrens nach einem der vorhergehenden Ansprüche ausgebildet sind.

10. Vorrichtung (1) nach Anspruch 9, **dadurch gekennzeichnet, dass** ein Aktuator (21) der Vorrichtung (1) an dem die Niederschlagauftrefffläche (2) aufweisenden Objekt (3) angreift und dazu ausgebildet ist, die Niederschlagauftrefffläche (2) zu einer hin- und hergehenden Bewegung anzuregen, vorzugsweise im Sinne einer Erschütterung anzustoßen.

11. Vorrichtung (1) nach Anspruch 9 oder 10, **dadurch gekennzeichnet, dass** die Temperaturmesseinrichtungen zum lokalen Messen der Temperatur (12) des Objekts (3) nahe der Niederschlagauftrefffläche (2) ausgebildet sind, wozu die Temperaturmesseinrichtungen vorzugsweise ein sich längs der Niederschlagauftrefffläche (2) erstreckendes Array von Temperatursensoren (10) aufweisen, die an einer der Niederschlagauftrefffläche (2) abgekehrten Unterseite des flächigen Objekts (3) angeordnet sind.

12. Vorrichtung (1) nach einem der Ansprüche 9 bis 11, **dadurch gekennzeichnet, dass** die Temperaturmesseinrichtungen zum Messen einer Lufttemperatur (14) in der Umgebung des Objekts (3) ausgebildet sind, wobei die Temperaturmesseinrichtungen vorzugsweise einen vor Niederschlag geschützten Lufttemperatursensor (6) aufweisen.

13. Vorrichtung (1) nach einem der Ansprüche 9 bis 12, **dadurch gekennzeichnet, dass** eine Heizeinrichtung der Vorrichtung (1) dazu ausgebildet sind,
- das Objekt (3) mit einer definierten Leistung zu erwärmen und/oder
- ein Referenzobjekt (3) mit einer definierten Leistung zu erwärmen, wobei das Referenzobjekt eine weitere Niederschlagauftrefffläche (2) aufweist und wobei weitere Temperaturmesseinrichtungen, die zum Messen einer Temperatur (12) des Referenzobjekts (3) ausgebildet sind, und weitere Niederschlagserfassungseinrichtungen, die zum Erfassen ausgebildet sind, ob Niederschlag auf die weitere Niederschlagauftrefffläche (2) auftritt, an die Auswerteeinrichtungen angeschlossen sind.

14. Vorrichtung (1) nach einem der Ansprüche 9 bis 13, **dadurch gekennzeichnet, dass** die Niederschlagauftrefffläche (2) unter einem Neigungswinkel zwischen 10° und 80°, vorzugsweise zwischen 50° und 70° zur Horizontalen ausgerichtet ist.

15. Vorrichtung (1) nach einem der Ansprüche 9 bis 14, **dadurch gekennzeichnet, dass** die Niederschlagserfassungseinrichtungen dazu ausgebildet sind, eine elektrische Kapazität und/oder eine elektrische Leitfähigkeit des Objekts (3) an der Niederschlagauftrefffläche (2) zu erfassen.

## Claims

1. Method of detecting subcooled liquid precipitation,
- wherein a temperature (12) of an object (3) having a precipitation impingement surface (2) is measured, and
- wherein it is determined whether precipitation onto the precipitation impingement surface (2) occurs,
**characterized in that**, in case of an increase (15) in the temperature (12) below 0°C because of occurring precipitation, a subcooled liquid precipitation warning is output.

2. Method of claim 1, **characterized in that** the precipitation impingement surface (2) is excited for a reciprocating motion, preferably jolted in the sense of a concussion, and that the subcooled liquid precipitation warning is upgraded with respect to its significance, if the increase (15) in the temperature (12) starts with the motion excited.

3. Method of any of the preceding claims, **characterized in that** the subcooled liquid precipitation warning is upgraded with respect to its significance
- if the increase in the temperature (12), when related to an amount of the precipitation determined, exceeds a predetermined threshold value, and/or
- if the increase (15) in the temperature (12) leads onto a temperature plateau at a plateau temperature of ≤ 0°C.

4. Method of any of the preceding claims, **characterized in that** an air temperature (14) in the surroundings of the object (3) is measured and that, with a measured air temperature (14) in a range from -20°C to -2°C, preferably in a range from -10°C to -5°C, the subcooled liquid precipitation warning is upgraded with respect to its significance.

5. Method of any of the preceding claims, **characterized in that**, in case of an increase (15) in the measured temperature (12) of the object (3) that starts locally and fades away along the precipitation impingement surface (2), the subcooled liquid precipitation warning is upgraded with respect to its significance.

6. Method of any of the preceding claims, **characterized in that**, after a detected increase (15) in the temperature (12) below 0°C because of occurring precipitation, the object (3) is heated up at a defined power, and that in case of a plateau of a resulting further increase in the measured temperature (12) of the object (3) at 0°C, the subcooled liquid precipitation warning is upgraded with respect to its significance.

7. Method of any of the preceding claims, **characterized in**
- **that** a reference object (3) having a further precipitation impingement surface (2) is kept at a further temperature above an air temperature (14) in the surroundings of the object (3) and the reference object (3), and that it is determined whether precipitation onto the further precipitation impingement surface (2) occurs, wherein the object (3) is not heated up, and
- **that** in case of the increase (15) in the temperature (12) below 0°C because of occurring precipitation onto the object (3), if, at the same time, no precipitation onto the further precipitation impingement surface (2) of the reference object is determined, a hoarfrost warning is output.

8. Method of any of the preceding claims, **characterized in that** the object (3) is heated up to above 0°C and it is determined whether an increase in an electric capacitance and/or in an electric conductivity of the object (3) at the precipitation impingement surface (2) results, wherein, if the increase results, it is deduced that snow or ice has been present on the precipitation impingement surface (2).

9. Apparatus (1) for detecting subcooled liquid precipitation, comprising
- an object (3) by having a precipitation impingement surface (2),
- temperature measurement devices configured for measuring a temperature (12) of the object (3),
- precipitation measurement devices which are configured for measuring a temperature (12) of the object (3),
- precipitation determination devices which are configured for determining whether precipitation onto the precipitation impingement surface (2) occurs, and
- evaluation devices,
**characterized in that** the evaluation devices are configured for detecting an increase in the temperature below 0°C because of occurring precipitation and for executing the method of any of the preceding claims.

10. Apparatus (1) of claim 9, **characterized in that** an actuator (21) of the apparatus (1) engages the object (3) comprising the precipitation impingement surface (2) and is configured for exciting the precipitation impingement surface (2) for a reciprocating motion, preferably for jolting it in the sense of a concussion.

11. Apparatus (1) of claim 9 or 10, **characterized in that** the temperature measuring devices are configured for locally measuring the temperature (12) of the object (3) close to the precipitation impingement surface (2), for which purpose the temperature measurement devices preferably have an array of temperature sensors (10) extending along the precipitation impingement surface (2), the temperature sensors (10) being arranged at a lower side of the two dimensional object (3) facing away from the precipitation impingement surface (2).

12. Apparatus (1) of any of claims 9 to 11, **characterized in that** the temperature measurement devices are configured for measuring an air temperature (14) in the surroundings of the object (3), wherein the temperature measuring devices preferably comprise a air temperature sensor (16) protected against precipitation.

13. Apparatus (1) of any of the claims 9 to 12, **characterized in that** a heating device of the apparatus (1) is configured for
- heating up the object (3) at a defined power and/or
- heating up a reference object (3) at a defined power, wherein the reference object has a further precipitation impingement surface (2) and wherein further temperature measurement devices which are configured for measuring a temperature (12) of the reference object (3) and further precipitation determination devices which are configured for determining whether precipitation onto the further precipitation impingement surface (2) occurs, are connected to the evaluation devices.

14. Apparatus (1) of any of the claims 9 to 13, **characterized in that** the precipitation impingement surface (2) is arranged at an inclination angel between 10° and 80°, preferably between 50° and 70°, with respect to the horizontal.

15. Apparatus (1) of any of the claims 9 to 14, **characterized in that** the precipitation determination devices are configured for determining an electric capacitance and/or an electric conductance of the object (3) at the precipitation impingement surface (2).

## Revendications

1. Procédé de détection d'un précipité liquide sous-refroidi,
- dans lequel une température (12) d'un objet (3) avec une surface d'impact de précipité (2) est mesurée et
- dans lequel il est détecté si le précipité arrive sur la surface d'impact du précipité (2), **caractérisé en ce que**, lors d'une montée (15) de la température (12) en dessous de 0 °C à la suite de l'impact d'un précipité, une alerte concernant un précipité liquide refroidi est émise.

2. Procédé selon la revendication 1, **caractérisé en ce que** la surface d'impact du précipité (2) est excitée en un mouvement de va-et-vient, de préférence dans le sens d'une vibration, et **en ce que**, lorsque la montée (15) de la température (12) survient avec le mouvement excité, l'alerte concernant le précipité liquide refroidi est mise à niveau en ce qui concerne son importance.

3. Procédé selon l'une des revendications précédentes, **caractérisé en ce que**
- lorsque la montée de la température (12) en ce qui concerne une quantité du précipité détecté dépasse une valeur limite prédéterminée et/ou
- lorsque la montée (15) de la température (12) conduit à un palier de température avec une température de palier ≤ 0 °C,
l'alerte concernant un précipité liquide sous-refroidi est mise à niveau en ce qui concerne son importance.

4. Procédé selon l'une des revendications précédentes, **caractérisé en ce qu'**une température de l'air (14) dans l'environnement de l'objet (3) est mesurée et **en ce que**, lors d'une température d'air (14) mesurée dans une plage de -20 °C à -2 °C, de préférence dans une plage de 10 °C à 5 °C, l'alerte concernant un précipité liquide sous-refroidi est mise à niveau en ce qui concerne son importance.

5. Procédé selon l'une des revendications précédentes, **caractérisé en ce que**, lors d'une montée (15) de la température mesurée (12) de l'objet (3), commençant localement et s'étendant le long de la surface d'impact du précipité (2), l'alerte concernant un précipité liquide sous-refroidi est mise à niveau en ce qui concerne son importance.

6. Procédé selon l'une des revendications précédentes, **caractérisé en ce que** l'objet (3) est chauffé, après la montée (15) détectée de la température (12) en dessous de 0 °C lors de l'apparition du précipité avec une puissance définie et **en ce que**, lors d'un palier d'une autre montée, qui en résulte, de la température mesurée (12) de l'objet (3) à 0 °C, l'alerte concernant un précipité liquide sous-refroidi est mise à niveau en ce qui concerne son importance.

7. Procédé selon l'une des revendications précédentes, **caractérisé en ce que**
- un objet de référence (3) avec une autre surface d'impact de précipité (2) est maintenu à une autre température au-dessus d'une température d'air (14) dans l'environnement de l'objet (3) et de l'objet de référence (3) et il est détecté si le précipité arrive sur l'autre surface d'impact de précipité (2), dans lequel l'objet (3) n'est pas chauffé et
- lors d'une montée (15) de la température (12) en dessous de 0 °C, à la suite d'un précipité apparaissant sur l'objet (3) lorsque, simultanément, aucun précipité n'est détecté sur l'autre surface d'impact de précipité (2) de l'objet de référence, une alerte concernant le givre est émise.

8. Procédé selon l'une des revendications précédentes, **caractérisé en ce que** l'objet (3) est chauffé à plus de 0 °C et il est détecté s'il en résulte une augmentation d'une capacité électrique et/ou d'une conductivité électrique de l'objet (3) au niveau de la surface d'impact du précipité (2), dans lequel, lorsque l'augmentation apparaît, il en est déduit que de la neige ou de la glace se trouve sur la surface d'impact du précipité (2).

9. Dispositif (1) de détection d'un précipité liquide sous-refroidi avec
- un objet (3) présentant une surface d'impact de précipité (2),
- des dispositifs de mesure de température qui sont conçus pour la mesure d'une température (12) de l'objet (3),
- des dispositifs de détection de précipité qui sont conçus pour la détection si le précipité arrive sur la surface d'impact du précipité (2) et
- des dispositifs d'analyse,
**caractérisé en ce que** les dispositifs d'analyse sont conçus pour la détection d'une montée de la température en dessous de 0 °C à la suite de l'apparition d'un précipité et pour l'exécution du procédé selon l'une des revendications précédentes.

10. Dispositif (1) selon la revendication 9, **caractérisé en ce qu'**un actionneur (21) du dispositif (1) s'appuie contre l'objet (3) présentant la surface d'impact de précipité (2) et est conçu pour exciter la surface d'impact de précipité (2) afin que celui-ci effectue un mouvement de va-et-vient, de préférence dans le sens d'une vibration.

11. Dispositif (1) selon la revendication 9 ou 10, **caractérisé en ce que** les dispositifs de mesure de température sont conçus pour la mesure locale de la température (12) de l'objet (3) près de la surface d'impact de précipité (2), les dispositifs de mesure de température comprenant, pour cela, de préférence une matrice de capteurs de température (10) s'étendant le long de la surface d'impact de précipité (2), qui sont disposés sur une face inférieure de l'objet plat (3) opposée à la surface d'impact du précipité (2).

12. Dispositif (1) selon l'une des revendications 9 à 11, **caractérisé en ce que** les dispositifs de mesure de température sont conçus pour la mesure d'une température d'air (14) dans l'environnement de l'objet (3), dans lequel les dispositifs de mesure de température comprennent de préférence un capteur de température d'air (6) protégé contre le précipité.

13. Dispositif (1) selon l'une des revendications 9 à 12, **caractérisé en ce qu'**un dispositif de chauffage du dispositif (1) est conçu
- pour chauffer l'objet (3) avec une puissance déterminée et/ou
- pour chauffer un objet de référence (3) avec une puissance déterminée, dans lequel l'objet de référence présente une autre surface d'impact de précipité (2) et dans lequel d'autres dispositifs de mesure de température, qui sont conçus pour la mesure d'une température (12) de l'objet de référence (3) et d'autres dispositifs de détection de précipité, qui sont conçus pour détecter si un précipité apparaît sur l'autre surface d'impact du précipité (2), sont raccordés aux dispositifs d'analyse.

14. Dispositif (1) selon l'une des revendications 9 à 13, **caractérisé en ce que** la surface d'impact du précipité (2) est orientée avec un angle d'inclinaison entre 10° et 80°, de préférence entre 50° et 70° par rapport à l'horizontale.

15. Dispositif (1) selon l'une des revendications 9 à 14, **caractérisé en ce que** les dispositifs de détection de précipité sont conçus pour mesurer une capacité électrique et/ou une conductivité électrique de l'objet (3) sur la surface d'impact du précipité (2).
